# EUROPÄISCHE PATENTSCHRIFT

(11) **EP 1 398 909 B1**
(45) Veröffentlichungstag und Bekanntmachung des Hinweises auf die Patenterteilung: **03.10.2007**
(21) Anmeldenummer: 02020322.0
(22) Anmeldetag: 11.09.2002
(51) Int. Cl.: H04L 12/26, H04L 25/14, H04Q 11/04

(54) **Verfahren und Vorrichtung zum Monitoren einer Datenübertragung**
Method and device for monitoring a data connection
Méthode et dispositif pour surveiller une connexion de données

(43) Veröffentlichungstag der Anmeldung: 17.03.2004
(73) Patentinhaber: Tektronix International Sales GmbH, 8212 Neuhausen (CH)
(72) Erfinder: Behrens, Stefan, 10625 Berlin (DE); Kolbe, Andreas, 12683 Berlin (DE)
(74) Vertreter: Schurack, Eduard F.

(56) Entgegenhaltungen:
- EP-A- 1 045 612
- US-A- 5 608 733
- US-A- 6 134 246
- DUMORTIER P ET AL: "TRANSPORT OF GIGABIT ATM CELL STREAMS OVER LOWER ORDER SDH BACKBONE" PROCEEDINGS OF THE CONFERENCE ON COMPUTER COMMUNICATIONS (INFOCOM). TORONTO, JUNE 12 - 16, 1994, LOS ALAMITOS, IEEE COMP. SOC. PRESS, US, Bd. 3, 12. Juni 1994 (1994-06-12), Seiten 1160-1167, XP000496577 ISBN: 0-8186-5572-0
- RICHARD CAM ET. AL.: "Inverse Multiplexing for ATM (IMA) Specificaton Ver. 1.1" THE ATM FORUM TECHNICAL COMMITTEE, 1. - 1. März 1999, Seiten 1-185, XP002233772

## Beschreibung

Die vorliegende Erfindung betrifft ein Verfahren und eine Vorrichtung zum Monitoren einer Datenübertragung, wobei eine Vielzahl von physikalischen Verbindungen zwischen zwei Netzknoten zu mindestens einer virtuellen Verbindung zusammengefasst sind, wobei die zwischen den beiden Netzknoten zu übertragenden Daten auf die einzelnen physikalischen Verbindungen verteilt werden, wobei auf den physikalischen Verbindungen zwischen den zwei Netzknoten während der Datenübertragung Datenpakete übermittelt werden, die Zugehörigkeitsinformation darüber enthalten, zu welcher virtuellen Verbindung die entsprechende physikalische Verbindung gehört.

Diese Erfindung basiert auf folgendem Hintergrund: Bei Betrieb von ATM (Asynchronous Transfer Mode) -Verbindungen über E1 (2,048 Mb/s) oder DS1 (1,544 Mb/s) - Leitungen stellt sich die Bandbreite dieser Verbindungen in vielen Fällen als zu niedrig heraus. Die nächsthöheren in der PDH-Hierarchie verwendeten Leitungen E3 (34,368 Mb/s) beziehungsweise DS3 (44,736 Mb/s) haben jedoch für viele Anwendungsfälle eine zu hohe Bandbreite und sind damit zu teuer. Hierfür bietet das Technical Committee des ATM-Forums eine Lösung und zwar mit der "Inverse Multiplexing for ATM (IMA) Specification" (AF-PHY-0086.001).

Diese Spezifikation beschreibt, wie bis zu 32 gleichartige physikalische Verbindungen in einer Gruppe zu einer gemeinsamen logischen Verbindung, das heißt zu einer virtuellen Verbindung, zusammengefasst werden können, über die dann ein ATM-Zellstrom übertragen wird. Die Zellen des ATM-Zellstroms werden dabei gleichmäßig im "round robin"-Verfahren auf die beteiligten physikalischen Verbindungen verteilt.

Um eine derartige Übertragung zu realisieren, müssen beide Endstellen einer solchen Verbindung "wissen", welche physikalischen Leitungen zu einer Gruppe zusammengefasst sind. Hierfür tauschen die beiden Endstellen spezielle ATM-Zellen aus, sogenannte ICP (IMA Control Protocol) -Zellen. Der Aufbau der virtuellen Verbindung wird mit Hilfe von state machines abgewickelt. Gemäß dem IMA-Protokoll werden die Parameter der IMA-Übertragung im hand-shake-Verfahren beim Aufbau der Verbindung zwischen den beiden Netzknoten vereinbart, während der Datenübertragung kontinuierlich überwacht und bei Bedarf aktualisiert. Für die Überwachung und Steuerung der Verbindung werden ebenfalls ICP Zellen eingesetzt. Mit Hilfe dieser kontinuierlichen Überwachung können Laufzeit- und Bitratenunterschiede zwischen den einzelnen physikalischen Verbindungen einer Gruppe ausgeglichen werden. Darüber hinaus werden mit Hilfe dieser speziellen ATM-Zellen gestörte physikalische Verbindungen identifiziert. Ebenso ist es möglich, dem Bandbreitenbedarf einer Anwendung entsprechend physikalische Verbindungen zu einer Gruppe hinzuzufügen oder aus einer Gruppe zu entfernen.

Zur Überwachung komplexer Kommunikationssysteme werden Monitoringgeräte eingesetzt, die die auf den Kommunikationsleitungen übertragenen Protokollinformationen auswerten. Mit Hilfe derartiger Geräte lässt sich sicherstellen, dass eine Kommunikation zwischen zwei Geräten einem vorgegebenen Kommunikationsprotokoll entspricht. Ebenso lassen sich fehlerhafte Protokollnachrichten wie auch Fehlerfälle im überwachten Telekommunikationssystem finden.

Aus dem Stand der Technik ist zu einem derartigen Zweck ein Gerät bekannt, das ein aktives Monitoring ermöglicht. Hierbei wird das Monitorgerät in die zu überwachende Leitung geschaltet. Im Falle einer IMA-Anwendung baut das Monitorgerät selbst IMA-Verbindungen in beide Richtungen auf. Die eigentlichen Nutzdaten werden dann über das Monitorgerät übertragen. Bei dieser bekannten Lösung wird das Monitorgerät Teil des Kommunikationssystems. Nachteilig an dieser Lösung ist, dass die auf den einzelnen physikalischen Leitungen übertragenen ATM-Zellen im Monitorgerät neu auf die physikalischen Leitungen verteilt werden, was nur noch verfälschte Aussagen zu Laufzeiten und verfälschte Analyseergebnisse ermöglicht. Weiterhin werden im Empfänger des Monitorgeräts Laufzeitunterschiede zwischen den einzelnen physikalischen Leitungen ausgeglichen. Dies bewirkt im Monitorgerät überdies eine Verzögerung der zu übertragenden Information. Der IMA-Spezifikation zufolge müssen mindestens Laufzeitunterschiede von 25 ms ausgeglichen werden. Dies führt ebenfalls zu einer Verfälschung der Monitoringergebnisse.

Der vorliegenden Erfindung liegt deshalb die Aufgabe zugrunde, ein gattungsgemäßes Verfahren beziehungsweise eine gattungsgemäße Vorrichtung derart weiterzubilden, dass ein genaueres nichtinvasives und auch ein unidirektionales Monitoring ermöglicht wird.

Diese Aufgabe wird gelöst durch ein Verfahren mit den Merkmalen von Patentanspruch 1 sowie durch eine Vorrichtung mit den Merkmalen von Patentanspruch 9.

Der vorliegenden Erfindung liegt die Erkenntnis zugrunde, dass ein Monitorgerät dann passiv an die zu überwachenden Leitungen angeschlossen werden kann, wenn das Gerät die auf den Leitungen gemäß der IMA-Spezifikation übertragenen ICP-Zellen geeignet analysiert. Entsprechend den in den ICP-Zellen übertragenen Informationen stellt das Gerät alle zu einer IMA-Gruppe gehörenden physikalischen Leitungen zusammen. Hierzu kann eine geeignete Auswahl der in einerlCP Zelle übertragenen Informationen verwendet werden, die im IMA Standard mit B und C klassifiziert werden. Sofern alle zu einer IMA-Gruppe gehörenden physikalischen Leitungen an das Gerät angeschlossen sind, gleicht das Gerät die Laufzeitunterschiede zwischen den einzelnen physikalischen Leitungen einer IMA-Gruppe aus, um die auf den einzelnen Leitungen empfangenen ATM Zellen zu einem ATM Zellstrom zusammenzusetzen, bei dem die Reihenfolge der ATM-Zellen der Sendereihenfolge entspricht. Die vom Monitoringgerät empfangenen ATM- Zellströme aller vom Gerät erkannten IMA Gruppen werden dann an einer Schnittstelle für die weitere Verarbeitung bereitgestellt. Sobald das Gerät diesen Zustand erreicht hat, folgt es allen Änderungen in den erkannten IMA-Gruppen, wie sie in der IMA-Spezifikation beschrieben sind. Das Monitoringgerät folgt zum Beispiel, wenn innerhalb einer IMA-Gruppe physikalische Leitungen zu- oder weggeschaltet werden. Ebenso erkennt das Gerät gestörte oder unterbrochene physikalische Verbindungen. Der ATM-Zellstrom an der Schnittstelle für die weitere Verarbeitung wird hiervon entsprechend der IMA-Spezifikation nicht beeinflusst.

Für eine bidirektionale Datenübertragung zwischen den beiden Netzknoten, wobei mindestens eine virtuelle Verbindung vom ersten zum zweiten Netzknoten dieselbe Zugehörigkeitsinformation haben kann wie mindestens eine virtuelle Verbindung vom zweiten zum ersten Netzknoten, wobei die Daten gemäß einem Übertragungsprotokoll kodiert sind, das mehrere Schichten umfasst, wobei die auf einer einzelnen physikalischen Verbindung einer virtuellen Verbindung übertragenen Daten nicht gemäß der höchsten Schicht kodiert sind, kann durch Aufteilung des Schritts d) des erfindungsgemäßen Verfahrens in folgende Teilschritte eine eindeutige Zuordnung erzielt werden, auch wenn die verschiedenen physikalischen Verbindungen an ein und dieselbe Schnittstelle angeschlossen werden: Zunächst wird eine Auswahl von physikalischen Verbindungen, die dieselbe Zugehörigkeitsinformation übertragen, einer virtuellen Verbindung zugeordnet. Anschließend wird mindestens ein auf mindestens einer virtuellen Verbindung übertragener Informationskanal erkannt, ebenso wie die dort vorliegende Informationsstruktur. Anschließend wird die sich dadurch in einer höheren Protokollschicht ergebende Information gebildet und diese Information wird ausgewertet, und es wird anhand der ausgewerteten Information überprüft, ob diese Auswahl von physikalischen Verbindungen tatsächlich eine virtuelle Verbindung bildet. Falls diese Überprüfung positiv verläuft, lässt sich die zuvor getätigte Auswahl physikalischer Verbindungen einer ersten virtuellen Verbindung zuordnen. Falls die Überprüfung negativ verläuft, werden die zuvor genannten Schritte mit unterschiedlichen Auswahlen von physikalischen Verbindungen wiederholt bis sich ergibt, dass die eine erste virtuelle Verbindung bildenden physikalischen Verbindungen bestimmt wurden.

Der besondere Vorteil der erfindungsgemäßen Lösung besteht darin, dass die auf den Leitungen eines Telekommunikationssystems übertragene Information durch die Überwachung nicht beeinflusst wird. Ebenso ist es ein großer Vorteil, dass das Monitorgerät die IMA-Gruppen, das heißt im Wortlaut der vorliegenden Erfindung virtuellen Verbindungen, in bereits aktiven Verbindungen finden kann. Es ist nicht erforderlich, den Aufbau einer IMA Gruppe zwischen zwei Endpunkten zu erfassen.

Bei einem ersten vorteilhaften Ausführungsbeispiel des erfindungsgemäßen Verfahrens wird daher in einem weiteren Schritt die extrahierte Zugehörigkeitsinformation ausgewertet, und anhand der ausgewerteten Zugehörigkeitsinformation ein Hinzuschalten von mindestens einer zusätzlichen physikalischen Verbindung zu der mindestens einen virtuellen Verbindung erkannt. Ebenfalls in Betracht kommt, in einem weiteren Schritt die extrahierte Zugehörigkeitsinformation auszuwerten, und anhand der ausgewerteten Zugehörigkeitsinformation ein Entfernen von mindestens einer physikalischen Verbindung aus der mindestens einen virtuellen Verbindung zu erkennen.

Vorzugsweise können die physikalischen Verbindungen, die dieselbe Zugehörigkeitsinformation übertragen wie die erste virtuelle Verbindung, einer zweiten virtuellen Verbindung zugeordnet werden, die zwischen denselben Netzknoten besteht, jedoch in umgekehrter Richtung überträgt wie die erste virtuelle Verbindung.

Bevorzugt wird in den Datenpaketen außerdem Sequenzinformation übertragen, wie die auf den einzelnen physikalischen Verbindungen einer virtuellen Verbindung übertragenen Daten zu einem kontinuierlichen Datenstrom zusammenzusetzen sind, wobei das Empfangsgerät diese Sequenzinformation auswertet und die Datenströme der einzelnen physikalischen Verbindungen, insbesondere unter Berücksichtigung unterschiedlicher Laufzeiten, in einen kontinuierlichen Datenstrom zusammensetzt und diesen an einem Ausgang bereitstellt. Bei dem IMA-Verfahren, an dem die vorliegende Erfindung zum leichteren Verständnis beispielhaft beschrieben wird, wird nur bei einer einstellbaren Anzahl von Zellen, das heißt bei jeder 32., 64., 128. oder 256. Zelle, die Sequenzinformation übertragen. Bei diesen Zellen handelt es sich dann um die ICP-Zellen.

Bei dem bereits erwähnten IMA-Verfahren sind die übertragenen Datenpakete ATM-Zellen, wobei die Vielzahl von physikalischen Verbindungen nach einem IMA-Verfahren zu einer oder mehreren virtuellen Verbindungen zusammengefasst sind, die Zugehörigkeitsinformation, die in den ICP-Zellen übertragene, mit B und C klassifizierte Information ist (Status & Control Change Indication, IMA ID Group Status and Control, Transmit Timing Information, Link 0 Information, Link 1 - 31 Information) und die Sequenzinformation die in die ICP-Zellen mit A klassifizierte Information ist (Cell ID und Link ID, IMA Frame Sequence Number, ICP Cell Offset, Link Stuff Indication).

Bei Auswertung der übertragenen Datenpakete durch Bilden der Information, die sich gemäß einer höheren Protokollschicht ergibt, kann die Protokollschicht beispielsweise AAL5 sein, wobei in Schritt d4) die Längenangabe für die übertragenen AAL5-PDUs (Protocol Data Units) und/oder die CRC32-Prüfsumme ausgewertet werden.

Handelt es sich um die Protokollschicht AAL2 wird in Schritt d4) in vorteilhafter Weise die Länge der Payload eines CPS-Packets, das sich über mehr als eine ATM-Zelle erstreckt, mit dem Offset Field der Folgezelle verglichen und/oder die Sequence Number von übertragenen AAL2-Zellen ausgewertet.

Details zu den erwähnten Protokollen können beispielsweise der ITU-T Recommendation I.363.2: B-ISDN ATM Adaption Layer Specification: Type 2 AAL sowie der ITU-T Recommendation I.363.5: B-ISDN ATM Adaption Layer Specification: Type 5 AAL entnommen werden.

Weitere vorteilhafte Ausführungsformen ergeben sich aus den Unteransprüchen.

Im Nachfolgenden wird nunmehr die vorliegende Erfindung anhand eines Ausführungsbeispiels unter Bezugnahme auf die beigefügten Zeichnungen näher beschrieben. Es zeigen:
- Figur 1: ein erstes Beispiel einer Vorrichtung zum Monitoren einer Datenübertragung; und
- Figur 2: ein Ausführungsbeispiel einer erfindungsgemäßen Vorrichtung zum Monitoren einer Datenübertragung.

Ohne Einschränkung der Tragweite der Erfindung wird diese im Nachfolgenden am Beispiel einer IMA-Verbindung, auf der ATM-Zellen übertragen werden, beschrieben. Wie für den Fachmann offensichtlich, kann diese Erfindung auch für andere entsprechend arbeitende Standards eingesetzt werden.

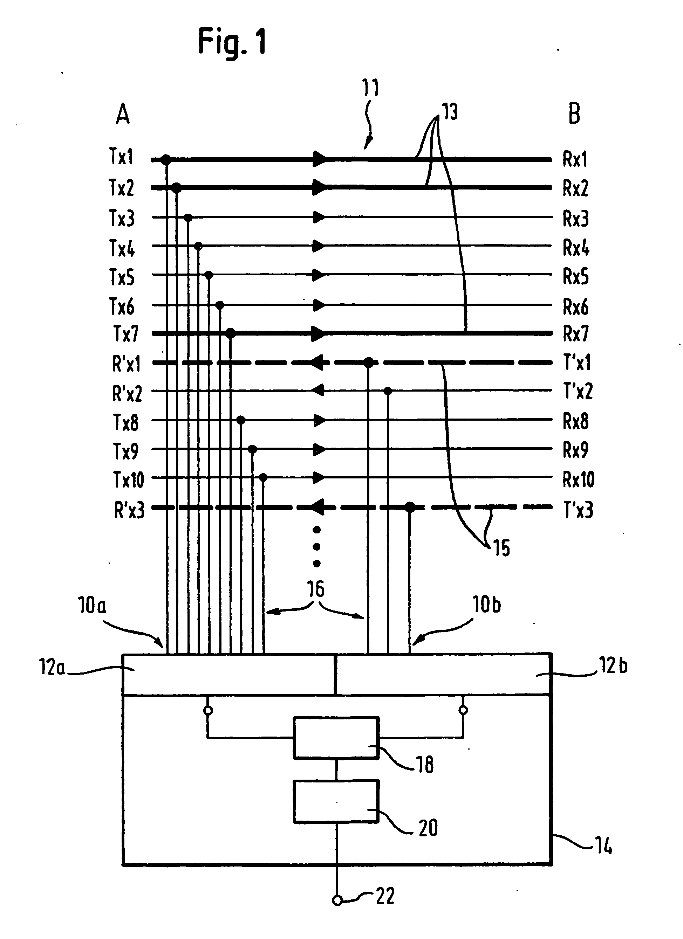

Figur 1 zeigt ein erstes Beispiel einer Vorrichtung zum Monitoren einer Datenübertragung. Zwischen zwei Netzknoten A, B bestehen eine Vielzahl von physikalischen Verbindungen 11. Die jeweilige Senderseite ist mit Tx bzw. T'x die jeweilige Empfängerseite mit Rx bzw. R'x gekennzeichnet. Zur leichteren Benennung sind die entsprechenden Sender- und Empfängeranschlüsse durchnummeriert. Zwischen jeweiligem Sender und Empfänger werden ATM-Zellen übertragen, wobei die drei mit dicken durchgezogenen Linien (Tx1 Rx1, Tx2 Rx2, Tx7 Rx7) kenntlich gemachten Verbindungen 13 zu einer IMA-Verbindung zusammengefasst sind. Da es sich um die erste IMA-Verbindung zwischen Netzknoten A und B handelt, ist diese mit der IMA ID 1 gekennzeichnet. Die mit dicken gestrichelten Linien (T'x1 R'x1, T'x3 R'x3) gekennzeichneten Verbindungen 15, auf denen vom Netzknoten B zum Netzknoten A gesendet wird, sind ebenfalls zu einer IMA-Verbindung zusammengefasst, die ebenfalls die IMA ID 1 trägt. Die physikalischen Verbindungen, auf denen vom Netzknoten A zum Netzknoten B übertragen wird, sind über eine Vielzahl von Anschlüssen, die der Einheitlichkeit halber mit der Bezugszahl 10a gekennzeichnet sind, an ein erstes Empfängermodul 12a einer erfindungsgemäßen Vorrichtung 14 zum Monitoren einer Datenübertragung angeschlossen. Die Verbindungen vom Netzknoten B zum Netzknoten A sind an die Anschlüsse 10b eines Empfangsteils 12b der Vorrichtung 14 angeschlossen. Die Vorrichtung 14 empfängt Signale auf den Leitungen 16 ohne selbst zu senden.

In einer Extraktionsvorrichtung 18 der Vorrichtung 14 wird aus den ICP-Zellen, die auf den Leitungen 16 empfangen werden, die IMA ID ermittelt und physikalische Verbindungen pro Empfangsteil 12a oder 12b, die dieselbe IMA ID aufweisen, der Auswertevorrichtung 20 einer einzelnen virtuellen Verbindung zugeordnet. Unter Zuhilfenahme der Link-ID, die ebenfalls in der Extraktionsvorrichtung 18 aus auf den Leitungen 16 empfangenen ICP-Zellen ermittelt wird, lassen sich die innerhalb einer virtuellen Verbindung übertragenen Signale in der Auswertevorrichtung 20 zu einem kontinuierlichen Datenstrom zusammensetzen, der am Ausgang 22 der Vorrichtung 14 bereitgestellt wird.

Für den Fall, dass vereinbarungsgemäß für IMA-Verbindungen zwischen dem Netzknoten A und B und dem Netzknoten B und A unterschiedliche IMA IDs vergeben werden, braucht nur eines der beiden Empfangsteile 12a oder 12b vorhanden sein.

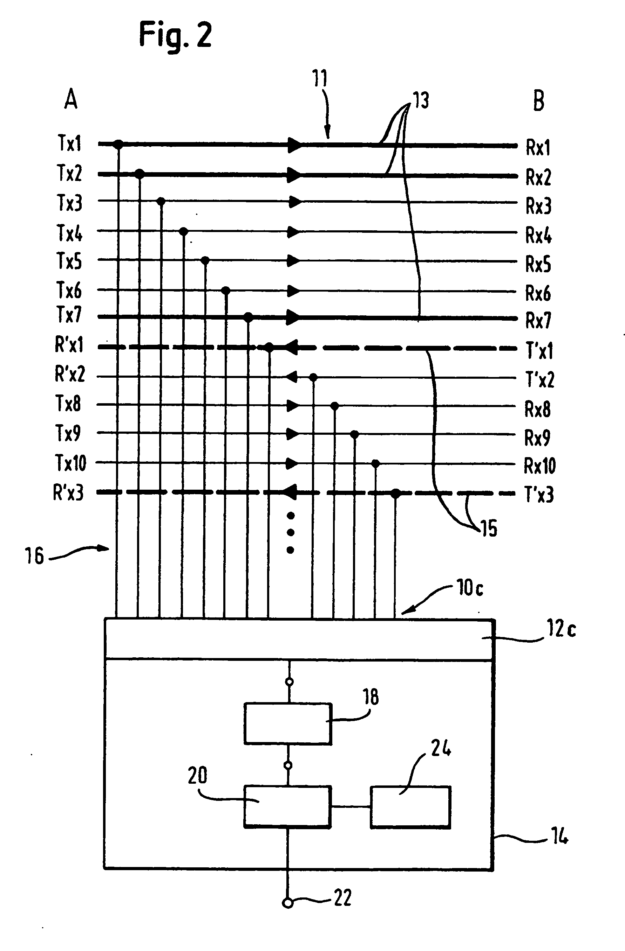

Figur 2 zeigt ein Ausführungsbeispiel einer erfindungsgemäßen Vorrichtung zum Monitoren einer Datenübertragung. Die Verbindungen zwischen Netzknoten A und B seien identisch zu denjenigen von Figur 1, auch hinsichtlich der IMA IDs, das heißt sowohl die Verbindungen Tx1 Rx1, Tx2 Rx2, Tx7 Rx7 sind zu einer IMA-Verbindung der IMA ID 1 zusammengefasst, wie auch die Verbindungen T'x1 R'x1 und Tx3 R'x3. In dem dargestellten Ausführungsbeispiel ist nunmehr ein Empfangsteil 12c vorgesehen, das wiederum über eine Vielzahl von Anschlüssen 10c für Leitungen 16 aufweist. In einer Extraktionsvorrichtung 18 werden wiederum die IMA ID und die Link-ID der Vielzahl von angeschlossenen physikalischen Verbindungen ermittelt. In einer Speichervorrichtung 24 sind Informationen zu dem bei der Übertragung zwischen den Netzknoten A und B verwendeten Kommunikationsprotokoll abgelegt. Zunächst wird in der Auswertevorrichtung 20 ein auf mindestens einer virtuellen Verbindung übertragener Informationskanal erkannt, ebenso wie die dort vorliegende Informationsstruktur. Unter Zuhilfenahme dieser Information wird von der Auswertevorrichtung 20 zunächst aus einer ersten Auswahl von physikalischen Verbindungen mit identischer IMA ID die Information gemäß einer höheren Protokollschicht gebildet, insbesondere unter Berücksichtigung unterschiedlicher Laufzeiten. Anschließend wird überprüft, ob diese Zusammensetzung ein sinnvolles Ergebnis liefert. Beispielsweise bei der Protokollschicht AAL5 wird die Längenangabe für die übertragenen AAL5-PDUs und/oder die CRC32-Prüfsumme ausgewertet. Bei der Protokollschicht AAL2 kann die Länge der Payload eines CPS-Packets, das sich über mehr als eine ATM-Zelle erstreckt, mit dem Offset Field der Folgezelle verglichen werden und/oder die Sequence Number von übertragenen AAL2-Zellen ausgewertet werden. Sofern ein sinnvolles Ergebnis herauskommt, ist davon auszugehen, dass die zuvor angenommene Auswahl physikalischer Leitungen tatsächlich eine virtuelle Verbindung bilden. Sollte das Ergebnis nicht sinnvoll sein, so wird eine andere Auswahl physikalischer Leitungen 16 einer entsprechenden Auswertung zugeführt. Dies wiederholt sich solange, bis ein sinnvolles Ergebnis erreicht wird und damit die physikalischen Verbindungen definiert werden können, die eine virtuelle Verbindung bilden. Damit müssen bei dem Ausführungsbeispiel von Figur 2 weder unterschiedliche IMA IDs für IMA-Verbindungen von A nach B und IMA-Verbindungen von B nach A vereinbart werden, noch müssen bei identischen IMA IDs diese an unterschiedliche Empfangsteile angeschlossen werden. Vielmehr können die Abgriffe 16 ohne Beachtung irgendeiner Reihenfolge an die Anschlüsse 10c der Vorrichtung 14 angeschlossen werden.

## Patentansprüche

1. Verfahren zum Monitoren einer bidirektionalen Datenübertragung, wobei eine Vielzahl von physikalischen Verbindungen zwischen zwei Netzknoten (A, B) zu mindestens einer virtuellen Verbindung (13; 15) zusammengefasst sind, wobei die zwischen den beiden Netzknoten (A, B) zu übertragenden Daten auf die einzelnen physikalischen Verbindungen (11) verteilt werden, wobei auf den physikalischen Verbindungen (11) zwischen den zwei Netzknoten (A, B) während der Datenübertragung Datenpakete übermittelt werden, die Zugehörigkeitsinformationen darüber enthalten, zu welcher virtuellen Verbindung (13; 15) die entsprechende physikalische Verbindung (11) gehört, wobei die Daten gemäß einem Übertragungsprotokoll kodiert sind, das mehrere Schichten umfasst, wobei die auf einer einzelnen physikalischen Verbindung (11) einer virtuellen Verbindung (13; 15) übertragenen Daten nicht gemäß der höchsten Schicht kodiert sind,
**gekennzeichnet durch** folgende Schritte:
a) passives Anschließen einer Empfangsvorrichtung an eine Vielzahl physikalischer Verbindungen (11), die zumindest eine virtuelle Verbindung (13; 15) umfassen;
b) Empfangen der auf der Vielzahl physikalischer Verbindungen (11) übertragenen Datenpakete;
c) Extrahieren der Zugehörigkeitsinformation der Datenpakete, die über die Vielzahl physikalischer Verbindungen (11) übertragen werden;
d) Auswerten der extrahierten Zugehörigkeitsinformation und Bestimmen der physikalischen Verbindungen (11), die zu jeweils einer virtuellen Verbindung (13; 15) zusammengefasst sind, aus der ausgewerteten Zugehörigkeltsinformation mittels folgender Teilschritte:
d1) Zuordnen einer Auswahl von physikalischen Verbindungen (11), die dieselbe Zugehörigkeitsinformation übertragen, zu einer virtuellen Verbindung (13; 15);
d2) Erkennen mindestens eines auf mindestens einer virtuellen Verbindung (13;15) übertragenen Informationskanals und Erkennen der dort vorliegenden Informationsstruktur;
d3) Bilden der sich **dadurch** in einer höheren Protokollschicht ergebenden Information;
d4) Auswerten der Information der höheren Protokollschicht und Überprüfen, ob diese Auswahl von physikalischen Verbindungen (11) tatsächlich eine virtuelle Verbindung (13; 15) bilden, anhand der ausgewerteten Information;
d5) Falls die Überprüfung in Schritt d4) positiv verläuft Zuordnen der Auswahl physikalischer Verbindungen (11) von Schritt d1) zu einer ersten virtuellen Verbindung (13; 15);
Falls die Überprüfung In Schritt d4) negativ verläuft Wiederholen der Schritte d1) bis d4) mit unterschiedlichen Auswählen von physikalischen Verbindungen (11) bis Schritt d4) ergibt, dass die eine erste virtuelle Verbindung (13; 15) bildenden physikalischen Verbindungen (11) bestimmt wurden.

2. Verfahren nach Anspruch 1,
**dadurch gekennzeichnet,**
**dass** in einem weiteren Schritt die extrahierte Zugehörigkeitsinformation ausgewertet wird,und anhand der ausgewerteten Zugehörigkeitsinformation ein Hinzuschalten von mindestens einer zusätzlichen physikalischen Verbindung (11) zu der mindestens einen virtuellen Verbindung (13; 15) erkannt wird.

3. Verfahren nach Anspruch 1 oder 2,
**dadurch gekennzeichnet,**
**dass** in einem weiteren Schritt die extrahierte Zugehörigkeitsinformation ausgewertet wird, und anhand der ausgewerteten Zugehörigkeitsinformation ein Entfernen von mindestens einer physikalischen Verbindung aus der mindestens einen virtuellen Verbindung (13; 15) erkannt wird.

4. Verfahren nach einem der vorhergehenden Ansprüche,
**dadurch gekennzeichnet,**
**dass** die physikalischen Verbindungen (11), die dieselbe Zugehörigkeitsinformation übertragen wie die erste virtuelle Verbindung (13), einer zweiten virtuellen Verbindung (15) zugeordnet werden, die zwischen denselben Netzknoten (A, B) besteht, jedoch in umgekehrter Richtung überträgt wie die erste virtuelle Verbindung (13).

5. Verfahren nach einem der vorhergehenden Ansprüche,
**dadurch gekennzeichnet,**
**dass** in den Datenpaketen außerdem Sequenzinformation übertragen wird, wie die auf den einzelnen physikalischen Verbindungen (11) einer virtuellen Verbindung (13, 15) übertragenen Daten zu einem kontinuierlichen Datenstrom zusammenzusetzen sind, wobei das Empfangsgerät (14) diese Sequenzinformation auswertet und die Datenströme der einzelnen physikalischen Verbindungen (11), insbesondere unter Berücksichtigung unterschiedlicher Laufzeiten, zu einem kontinuierlichen Datenstrom zusammensetzt und diesen an einem Ausgang (22) bereitstellt.

6. Verfahren nach einem der vorhergehenden Ansprüche,
**dadurch gekennzeichnet,**
**dass** die übertragenen Datenpakete ATM-Zeflen sind, eine Vielzahl von physikalischen Verbindungen (11) nach einem IMA-Verfahren zu einer oder mehreren virtuellen Verbindungen (13; 15) zusammengefaßt sind, die Zugehörigkeitsinformation eine geeignete Auswahl der in den ICP-Zellen übertragenen Information ist, die in der IMA Spezifikation mit B und C klassifiziert ist, und die Sequenzinformation die In den ICP-Zellen übertragene Information ist, die in der IMA Spezifikation mit A klassifiziert ist.

7. Verfahren nach einem der vorhergehenden Ansprüche,
**dadurch gekennzeichnet,**
**dass** die höhere Protokollschicht AAL5 ist und in Schritt d4) die Längenangabe für die übertragenen AAL5 PDUs und/oder die CRC32-Prüfsumme ausgewertet werden.

8. Verfahren nach einem der Ansprüche 1 bis 6,
**dadurch gekennzeichnet,**
**dass** die höhere Protokollschicht AAL2 ist und in Schritt d4) die Länge der Payload eines CPS Packets, das sich über mehr als eine ATM-Zelle erstreckt, mit dem Offset Field der Folgezelle verglichen wird und/oder die Sequence Number von übertragenen AAL2-Zellen ausgewertet wird.

9. Vorrichtung zum Monitoren einer bidirektionalen Datenübertragung, bei der eine Vielzahl von physikalischen Verbindungen (11) zwischen zwei Netzknoten (A, B) zu mindestens einer virtuellen Verbindung (13; 15) zusammengefaßt sind, wobei die zwischen den beiden Netzknoten (A, B) zu übertragenden Daten auf die einzelnen physikalischen Verbindungen (11) verteilt sind, wobei auf den physikalischen Verbindungen (11) zwischen den zwei Netzknoten (A, B) während der Datenübertragung Datenpakete übermittelt werden, die Zugehörigkeitsinfarmation darüber enthalten, zu welcher virtuellen Verbindung (13; 15) die entsprechende physikalische Verbindung (11) gehört, wobei die Daten gemäß einem Übertragungsprotokoll kodiert sind, das mehrere Schichten umfasst, wobei die auf einer einzelnen physikalischen Verbindung (11) einer virtuellen Verbindung (13; 15) übertragenen Daten nicht gemäß der höchsten Schicht kodiert sind, umfassend:
- eine Vielzahl von Anschlüssen (10c) zum passiven Anschließen an eine Vielzahl physikalischer Verbindungen (11), die zumindest eine virtuelle Verbindung (13;15) umfassen; und
- eine Empfangsvorrichtung (14) mit
- einer Vorrichtung (12c) zum Empfangen der auf der Vielzahl physikalischer Verbindungen (11) übertragenen Datenpakete;
- einer Vorrichtung (18) zum Extrahieren der Zugehörigkeitsinformation der Datenpakete, die über die Vielzahl physikalischer Verbindungen (11) übertragen werden;
- einer Vorrichtung (20) zum Auswerten der extrahierten Zugehörigkeitsinformation und zum Bestimmen der physikalischen Verbindungen (11), die zu jeweils einer virtuellen Verbindung (13; 15) zusammengefasst sind, aus der ausgewerteten Zugehörigkeitsinformation, wobei die Vorrichtung (20) zum Ausführen folgender Schritte ausgebildet ist:
d1) Zuordnen einer Auswahl von physikalischen Verbindungen (11), die dieselbe Zugehörigkeitsinformation übertragen, zu einer virtuellen Verbindung (13; 15);
d2) Erkennen mindestens eines auf mindestens einer virtuellen Verbindung (13; 15) übertragenen Informationskanals und Erkennen der dort vorliegenden informationsstruktur;
d3) Bilden der sich **dadurch** in einer höheren Protokollschicht ergebenden Information;
d4) Auswerten der Information der höheren Protokollschicht, und Überprüfen, ob diese Auswahl von physikalischen Verbindungen (11) tatsächlich eine virtuelle Verbindung (13; 15) bilden, anhand der ausgewerteten information;
d5) Falls die Überprüfung in Schritt d4) positiv verläuft: Zuordnen der Auswahl physikalischer Verbindungen (11) von Schritt d1) zu einer ersten virtuellen Verbindung (13; 15);
Falls die Überprüfung in Schritt d4) negativ verläuft: Wiederholen der Schritte d1) bis d4) mit unterschiedlichen Auswahlen von physikalischen Verbindungen (11) bis Schritt d4) ergibt, dass die eine erste virtuelle Verbindung (13; 15) bildenden physikalischen Verbindungen (11) bestimmt wurden.

## Claims

1. Method for monitoring a bidirectional data transmission, with a plurality of physical links between two network nodes (A, B) being combined to form at least one virtual link (13; 15), with the data to be transmitted between the two network nodes (A, B) being distributed to the individual physical links (11), with data packets, which contain affiliation information about which virtual link (13; 15) the corresponding physical link (11) belongs to, being transmitted on the physical links (11) between the two network nodes (A, B) during the data transmission, wherein the data are encoded according to a transmission protocol comprising several layers, wherein the data transmitted on an individual physical link (11) of a virtual link (13; 15) are not encoded according to the top layer,
**characterised by** the following steps:
a) Passive connecting of a receiving device to a plurality of physical links (11) comprising at least one virtual link (13; 15);
b) Receiving data packets transmitted on the plurality of physical links (11);
c) Extracting the affiliation information of the data packets which are transmitted via the plurality of physical links (11);
d) Analysing the extracted affiliation information and determining the physical links (11), which are combined to form one virtual link (13; 15) each, from the analysed affiliation information by means of the following partial steps:
d1) assigning a selection of physical links (11) which transmit the same affiliation information to a virtual link (13; 15);
d2) recognising at least one information channel transmitted on the at least one virtual link (13; 15) and recognising the information structure present therein;
d3) Forming the information resulting therefrom in a higher protocol layer;
d4) Analysing the information of the higher protocol layer and checking whether this selection of physical links (11) actually form a virtual link (13; 15) on the basis of the analysed information;
d5) In case the check-up in step d4) renders a positive result: Assigning the selection of physical links (11) of step d1) to a first virtual link (13; 15);
In case the check-up in step d4) renders a negative result: Repeating steps d1) to d4) with various selections of physical links (11) until step d4) renders that the physical links (11) forming one first virtual link (13; 15) have been determined.

2. Method according to claim 1,
**characterised in that**
in a further step the extracted affiliation information is analysed and on the basis of the analysed affiliation information the connection of at least one additional physical link (11) to the at least one virtual link (13; 15) is recognised.

3. Method according to claims 1 or 2,
**characterised in that**
in a further step the extracted affiliation information is analysed and on the basis of the analysed affiliation information a removal of at least one physical link from the at least one virtual link (13; 15) is recognised.

4. Method according to one of the above claims,
**characterised in that**
the physical links (11) transmitting the same affiliation information as the first virtual link (13) are assigned to a second virtual link (15) existing between the same network nodes (A, B) but transmitting in the opposite direction to the first virtual link (13).

5. Method according to one of the above claims,
**characterised in that**
in the data packets moreover sequence information is transmitted about how the data transmitted on the individual physical links (11) of a virtual link (13; 15) are to be combined to form a continuous data stream, with the receiving device (14) analysing this sequence information and combining the data streams of the individual physical links (11) to form a continuous data stream, taking the different run times in particular into account, and making said data stream available at an output (22).

6. Method according to one of the above claims,
**characterised in that**
the transmitted data packets are ATM cells, a plurality of physical links (11) are combined according to an IMA method to form one or several virtual links (13; 15), the affiliation information is a suitable selection of the information transmitted in the ICP cells, which is classified as B and C in the IMA specification, and the sequence information is the information transmitted in the ICP cells, which is classified as A in the IMA specification.

7. Method according to one of the preceding claims,
**characterised in that**
the higher protocol layer is AAL5 and in step d4) the indication of length for the transmitted AAL5 PDUs and/or the CRC32 check sum are analysed.

8. Method according to one of claims 1 to 6,
**characterised in that**
the higher protocol layer is AAL2 and in step d4) the length of the payload of a CPS packet extending over more than one ATM cell is compared with the offset field of the subsequent cell and/or the sequence number of transmitted AAL2 cells is analysed.

9. Device for monitoring a bidirectional data transmission, in which a plurality of physical links (11) between two network nodes (A, B) are combined to form at least one virtual link (13; 15), with the data to be transmitted between the two network nodes (A, B) being distributed among the individual physical links (11), with data packets containing affiliation information about which virtual link (13; 15) the corresponding physical link (11) belongs to being transmitted on the physical links (11) between the two network nodes (A, B) during the data transmission, wherein the data are encoded according to a transmission protocol comprising several layers, wherein the data transmitted on an individual physical link (11) of a virtual link (13; 15) are not encoded according to the top layer, comprising:
- a plurality of connections (10c) for passively connecting to a plurality of physical links (11) comprising at least one virtual link (13; 15); and
- a receiving device (14) comprising
- a device (12c) for receiving the data packets transmitted on the plurality of physical links (11);
- a device (18) for extracting the affiliation information of the data packets transmitted via the plurality of physical links (11);
- a device (20) for analysing the extracted affiliation information and for determining the physical links (11), which are combined to form a virtual link (13, 15) each, from the analysed affiliation information, the device (2) being configured to perform the following steps:
d1) Assigning a selection of physical links (11), which transfer the same affiliation information, to a virtual link (13; 15);
d2) Recognising at least one information channel transmitted on at least one virtual link (13; 15) and recognising the information structure present therein;
d3) Forming the information resulting therefrom in a higher protocol layer;
d4) Analysing the information of the higher protocol layer and checking on the basis of the analysed information whether this selection of physical links (11) actually form a virtual link (13; 15);
d5) In case the check-up in step d4) renders a positive result: Assigning the selection of physical links (11) of step d1) to a first virtual link (13; 15);
In case the check-up in step d4) renders a negative result: Repeating steps d1) to d4) with different selections of physical links (11) until the result of step d4) is that the physical links (11) forming a first virtual link (13; 15) have been determined.

## Revendications

1. Procédé de surveillance d'une transmission de données bidirectionnelle, de multiples liaisons physiques entre deux noeuds de réseau (A, B) étant regroupées en au moins une liaison virtuelle (13 ; 15), les données à transmettre entre les deux noeuds de réseau (A, B) étant réparties entre les différentes liaisons physiques (11), des paquets de données étant transmis pendant la transmission de données par les liaisons physiques (11) entre les deux noeuds de réseau (A, B) qui contiennent des informations d'appartenance indiquant la liaison virtuelle (13 ; 15) à laquelle la liaison physique (11) correspondante appartient, les données étant codées selon un protocole de transmission comprenant plusieurs couches, les données transmises par une liaison physique (11) individuelle d'une liaison virtuelle (13 ; 15) n'étant pas codées selon la couche supérieure,
**caractérisé par** les étapes suivantes :
a) raccordement passif d'un dispositif de réception à de multiples liaisons physiques (11) qui comprennent au moins une liaison virtuelle (13 ; 15) ;
b) réception des paquets de données transmis par les multiples liaisons physiques (11) ;
c) extraction de l'information d'appartenance des paquets de données qui sont transmis par les multiples liaisons physiques (11) ;
d) exploitation de l'information d'appartenance extraite et détermination des liaisons physiques (11) chaque fois regroupées en une liaison virtuelle (13 ; 15) à partir de l'information d'appartenance exploitée au moyen des étapes partielles suivantes :
d1) affectation à une liaison virtuelle (13 ; 15) d'une sélection de liaisons physiques (11) qui transmettent la même information d'appartenance ;
d2) reconnaissance d'au moins un canal d'information transmis par au moins une liaison virtuelle (13 ; 15) et reconnaissance de la structure d'information s'y présentant ;
d3) formation de l'information en résultant dans une couche de protocole supérieure ;
d4) exploitation de l'information de la couche de protocole supérieure et vérification de ce que cette sélection de liaisons physiques (11) forme réellement une liaison virtuelle (13 ; 15), en fonction de l'information exploitée ;
d5) si la vérification de l'étape d4) est positive : affectation de la sélection de liaisons physiques (11) de l'étape d1) à une première liaison virtuelle (13 ; 15) ;
si la vérification de l'étape d4) est négative : répétition des étapes d1) à d4) avec des sélections différentes de liaisons physiques (11) jusqu'à ce que l'étape d4) produise que les liaisons physiques (11) formant une première liaison virtuelle (13 ; 15) aient été déterminées.

2. Procédé selon la revendication 1,
**caractérisé en ce que**
au cours d'une étape suivante, l'information d'appartenance extraite est exploitée et, qu'en fonction de l'information d'appartenance exploitée, une connexion supplémentaire d'au moins une liaison physique (11) à ladite au moins une liaison virtuelle (13 ; 15) est reconnue.

3. Procédé selon la revendication 1 ou 2,
**caractérisé en ce que**
au cours d'une étape suivante, l'information d'appartenance extraite est exploitée et, qu'en fonction de l'information d'appartenance exploitée, une suppression d'au moins une liaison physique de ladite au moins une liaison virtuelle (13 ; 15) est reconnue.

4. Procédé selon l'une quelconque des revendications précédentes,
**caractérisé en ce que**
une deuxième liaison virtuelle (15) est affectée aux liaisons physiques (11) qui transmettent la même information d'appartenance que la première liaison virtuelle (13), figurant entre les mêmes noeuds de réseau (A, B) mais transmettant en direction inverse de celle de la première liaison virtuelle (13).

5. Procédé selon l'une quelconque des revendications précédentes,
**caractérisé en ce que**
dans les paquets de données, une information de séquence est, en outre, transmise sur la manière dont les données transmises par les différentes liaisons physiques (11) d'une liaison virtuelle (13 ; 15) sont assemblées en un flux continu de données, l'appareil de réception (14) exploitant cette information de séquence et assemblant les flux de données des différentes liaisons physiques (11), en particulier en tenant compte de temps de transmission différents, en un flux continu de données et le fournissant à une sortie (22).

6. Procédé selon l'une quelconque des revendications précédentes,
**caractérisé en ce que**
les paquets de données transmis sont des cellules ATM, que de multiples liaisons physiques (11) sont regroupées après un processus IMA en une ou plusieurs liaisons virtuelles (13 ; 15), que l'information d'appartenance est une sélection adaptée de l'information transmise dans les cellules ICP, classée avec B et C dans la spécification IMA, et que l'information de séquence est l'information transmise dans les cellules ICP, classée avec A dans la spécification IMA.

7. Procédé selon l'une quelconque des revendications précédentes,
**caractérisé en ce que**
la couche de protocole supérieure est AAL5 et qu'à l'étape d4), l'indication de longueur des PDU AAL5 transmises et/ou la somme de contrôle CRC32 sont exploitées.

8. Procédé selon l'une quelconque des revendications 1 à 6,
**caractérisé en ce que**
la couche de protocole supérieure est AAL2 et qu'à l'étape d4), la longueur des données utiles d'un paquet CPS occupant plus qu'une cellule ATM est comparée au champ de décalage de la cellule suivante et/ou que le numéro de cellules AAL2 transmises est exploité.

9. Dispositif de surveillance d'une transmission de données bidirectionnelle, de multiples liaisons physiques (11) entre deux noeuds de réseau (A, B) étant regroupées en au moins une liaison virtuelle (13 ; 15), les données à transmettre entre les deux noeuds de réseau (A, B) étant réparties entre les différentes liaisons physiques (11), des paquets de données étant transmis pendant la transmission de données par les liaisons physiques (11) entre les deux noeuds de réseau (A, B) qui contiennent des informations d'appartenance indiquant la liaison virtuelle (13 ; 15) à laquelle la liaison physique (11) correspondante appartient, les données étant codées selon un protocole de transmission comprenant plusieurs couches, les données transmises par une liaison physique (11) individuelle d'une liaison virtuelle (13 ; 15) n'étant pas codées selon la couche supérieure, comprenant :
- de multiples raccordements (10c) pour le raccordement passif à de multiples liaisons physiques (11) qui comprennent au moins une liaison virtuelle (13 ; 15) ; et
- un dispositif (12c) pour la réception des paquets de données transmis par les multiples liaisons physiques (11) ;
- un dispositif (18) d'extraction de l'information d'appartenance des paquets de données qui sont transmis par les multiples liaisons physiques (11) ;
- un dispositif (20) d'exploitation de l'information d'appartenance extraite et de détermination des liaisons physiques (11) chaque fois regroupées en une liaison virtuelle (13 ; 15) à partir de l'information d'appartenance exploitée, le dispositif (20) étant conçu pour parcourir les étapes suivantes :
d1) affectation à une liaison virtuelle (13 ; 15) d'une sélection de liaisons physiques (11) qui transmettent la même information d'appartenance ;
d2) reconnaissance d'au moins un canal d'information transmis par au moins une liaison virtuelle (13 ; 15) et reconnaissance de la structure d'information s'y présentant ;
d3) formation de l'information en résultant dans une couche de protocole supérieure ;
d4) exploitation de l'information de la couche de protocole supérieure et vérification de ce que cette sélection de liaisons physiques (11) forme réellement une liaison virtuelle (13 ; 15), en fonction de l'information exploitée ;
d5) si la vérification de l'étape d4) est positive : affectation de la sélection de liaisons physiques (11) de l'étape d1) à une première liaison virtuelle (13 ; 15) ;
si la vérification de l'étape d4) est négative : répétition des étapes d1) à d4) avec des sélections différentes de liaisons physiques (11) jusqu'à ce que l'étape d4) produise que les liaisons physiques (11) formant une première liaison virtuelle (13 ; 15) aient été déterminées.
